# EUROPEAN PATENT SPECIFICATION

(11) **EP 0 966 911 B1**
(45) Date of publication and mention of the grant of the patent: **19.05.2004**
(21) Application number: 99202055.2
(22) Date of filing: 25.06.1999
(51) Int. Cl.: A47J 37/07

(54) **Grill**
Grill
Barbecue

(30) Priority: 26.06.1998 BE 9800486
(43) Date of publication of application: 29.12.1999
(73) Proprietor: Van Dessel, Gerard, 2950 Kapellen (BE); Kohler, Helga, 2950 Kapellen (BE)
(72) Inventor: Van Dessel, Gerard, 2950 Kapellen (BE); Kohler, Helga, 2950 Kapellen (BE)
(74) Representative: Donné, Eddy

(56) References cited:
- DE-A- 1 803 466
- DE-A- 2 154 388

## Description

This invention relates to a grill, more particular a barbecue, for grilling, broiling or heating food, such as meat, fish, bread, potatoes, vegetables etc.

The barbecues available on the market are mostly of the type whereby the charcoal is disposed below the food to be roasted.

Grilling food as meat, fish, etc. on these known barbecues may result in unhealthy and carcinogenic effects, since the fats, juices etc. of the food drip into the fire and burn, releasing an unhealthy smoke and/or causing flames. Due to this burning, PCA's (polycyclic aromatic hydrocarbons) are set free and, in the form of rising vapours, penetrate into the meat or other foodstuff. This is very detrimental to health and, when grilling a lot, even carcinogenic.

From prior art documents DE 1803466 and DE 2154388, a barbecue is known which does not show the above-mentioned disadvantages. Thereto a charcoal container is vertically positioned and the food is presented to the sides by means of elements that hold the food. These means can be positioned at a chosen distance from the charcoal container and/or at a chosen height. A disadvantage of these grills lies in the fact that the distance of said means and the food which they hold, once it is held for some time in front of the hot charcoal, can not be adjusted anymore in respect to the container in a safe manner.

In general the present invention aims to provide in a new sort of grill, more particularly barbecue, which offers one of more advantages in respect to the existing barbecues, as will become clear from further description, end whereby at least a more safe manipulation can be guaranteed.

To this aim, the invention provides a grill, comprising at least, on the one hand, a heating element which substantially consists of a container for charcoal and, on the other hand, means allowing to present food to be grilled at least at two sides of said container, where said means include one or more upstanding supports for elements for holding food in front of said sides of the container , which supports, at their lower sides, can be displaced along one or more horizontal guidances, located at the lower side of the container, by means of feet or handles, allowing to change the distance of said supports in respect to the container.

The major advantage of this invention is that the manipulation of the grill, more particularly the displacement of the elements that hold the food in order to change the distance in respect to the container, can be done in a safe manner. The risk of suffering burn injuries are lowered in a significant manner.

This preferred embodiment leads to the advantage of not having disturbing elements in front of the heated container, as can be seen in DE 1803466, which become hot when the grill is in use.

Preferably, the upstanding supports can be displaced independently from each other, in order to be able to hold the elements for holding food at one side closer to the container than at the other side, for example when the heat of the charcoal is not equally spread over the container.

The fact that the food can be presented at least at two sides of the container, offers, amongst others, the advantage that the heat of the charcoal can be used in an optimal manner, as it is possible to grill simultaneously at least at two sides of the heating element. Furthermore, as the food is presented preferably at the lateral sides, juices dripping from the food can never drip onto the charcoal, resulting in that the above-mentioned disadvantages are excluded.

Preferably, the container is rectangular. Such container offers the advantage that the lateral sides are vertical and the heat can be transmitted optimally sidewards.

In the most preferred embodiment the grill is provided with a relatively small container, in other words a container showing a distance between the opposite lateral sides which are directed to the food which is smaller than the height and length of said container. Such small container offers the advantage that the amount of charcoal needed to grill can be limited to a strict minimum.

In a practical embodiment at least said two opposite lateral sides are formed out of mesh-shaped grate. Such mesh-shaped grate prevents the charcoal from falling out of the container and allows an optimal heat transfer towards the food.

It is also preferred that the container is open or can be opened at the. top side, whereas at the bottom side it is provided with passages for the ashes. This offers the advantage that the container can easily be filled up with charcoal any time, even during grilling, whereas the ashes can leave the container at the lower side.

In a preferred embodiment, the means allowing to present the food to be grilled at the sides of said container, are provided with adjusting means allowing an adjustment in height and/or to change the distance of these means in respect to the container. In this manner, a maximal flexibility is offered to the user, allowing him to adjust the temperature at which the food is exposed.

Further, the means allowing to present the food to the sides of the container may include several kinds of elements for holding the food, such as an element consisting of a pair of grids in between which food can be clamped and/or an element consisting of a rotatable spit.

Furthermore, the grill may comprise an upper grid which can be placed directly or indirectly on top of the container. This upper grid is ideal for heating food that is wrapped in aluminium foil to preserve the food from being exposed to unhealthy smoke.

With the intention of better showing the characteristics of the invention, hereafter, as an example without any limitative character, two preferred forms of embodiment are described, with reference to the accompanying drawings, in which:
figure 1 schematically represents a grill according to the invention;
figures 2 to 4 represent different elements for holding the food which can be used in combination with the grill of figure 1;
figure 5 represents an alternative form of embodiment of a grill according to the invention;
figure 6 represents a cross section according to line VI-VI in figure 5, on an enlarged scale.

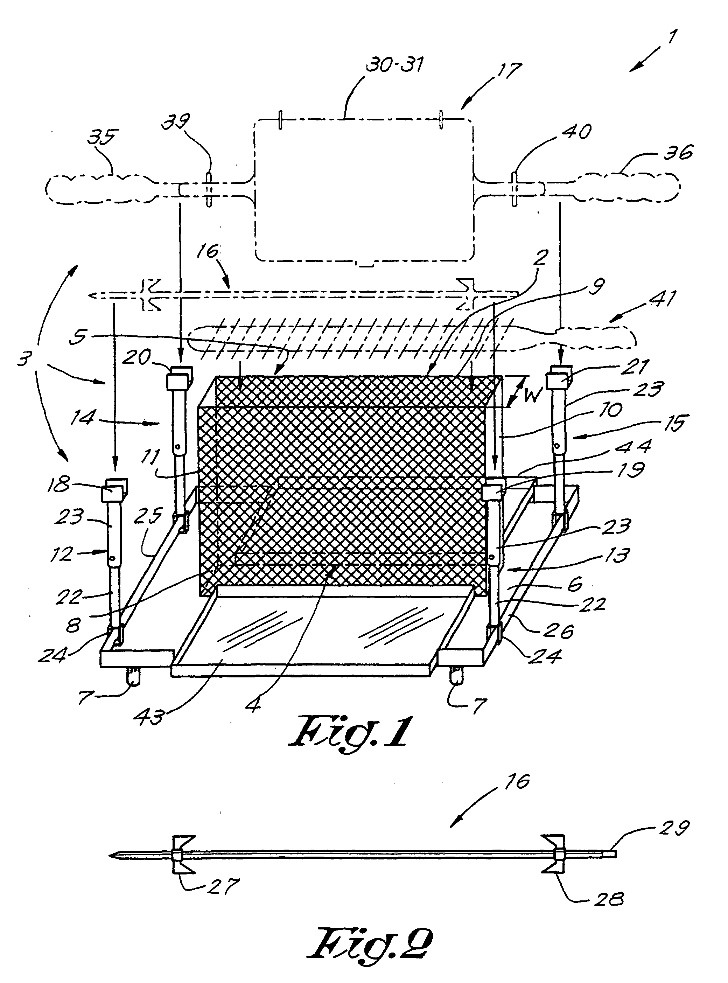

As represented in figure 1, the grill 1 according to the invention substantially consists in, on the one hand, a heating element which substantially consists of a container 2 for charcoal and, on the other hand, means 3, which may be of different nature, allowing to present food to be grilled at least at two sides, in this case the opposite lateral sides 4-5, of said container 2.

As shown in figure 1 the container 2 and the means 3 are preferably mounted on a common base plate 6, which may be supported by feet 7. Of course, in a variant, the grill may be placed on a support frame allowing to dispose the grill onto the floor or ground.

The container 2 is rectangular and is standing upright. Furthermore this container 2 is relatively small, in other words shows a width W or distance between said opposite lateral sides 4-5 which is considerably smaller than the height and length of said container 2.

At least at said two opposite lateral sides 4-5 the container 2 is provided with walls 8-9 which are formed out of mesh-shaped grate or something similar. The side walls 10-11 are preferably closed by means of metal plates.

At the top side the container 2 is open, such that it can be filled with charcoal. In a non-represented variant, the container 2 may be closed with a removable cover or with a grid.

The above-mentioned means 3 to present food to be grilled at least at the sides 4-5 of said container 2 comprise one or more supports, in this case two pairs of supports 12-13 and 14-15, for supporting elements 16-17 for holding food in front of the sides 4-5 of the container 2. On top the supports 12-13 and 14-15 are provided with seats 18-19 and 20-21, which in the represented embodiment consist of U-shaped elements.

The means 3, and more particularly the supports 12-13 and 14-15, are provided with adjusting means allowing an adjustment in height, as well as with adjusting means allowing to change the distance of these means 3 in respect to the container 2.

The adjustment means allowing an adjustment in height consist in that the supports 12-13 and 14-15 are formed of two portions 22-23, respectively a lower portion 22 and an upper portion 23 which can be raised telescopically. Hereby, the upper portion 23 can be brought preferably in a plurality of positions by means of non-represented securing or clamping means.

The adjustment means allowing to change the distance of the supports 12-13 and 14-15 in respect to the container 2, consist of feet 24 at the lower end of the supports 12-13 and 14-15, which can be displaced along one or more horizontal guidances, in this case formed by two opposite edges 25-26 of the base plate 6.

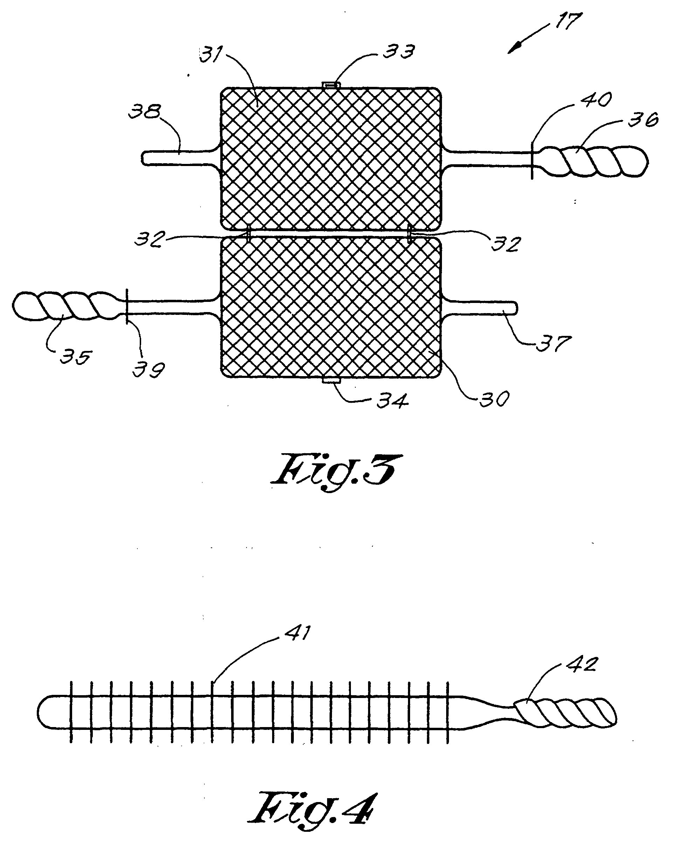

As represented in figure 2, the abovesaid element 16 consists of a spit for rotational grilling, which can be disposed in one pair of seats 18-19 or 20-21.

As shown in the drawings, the spit may be provided with two adjustable metal carriers 27-28 to hold meat.

One extremity of the spit is provided with a square portion 29 in order to provide for a connection to an electric motor, which is not represented in the figure. It is clear that it is also possible to place a handle for manual rotation on the square portion 29 of the spit.

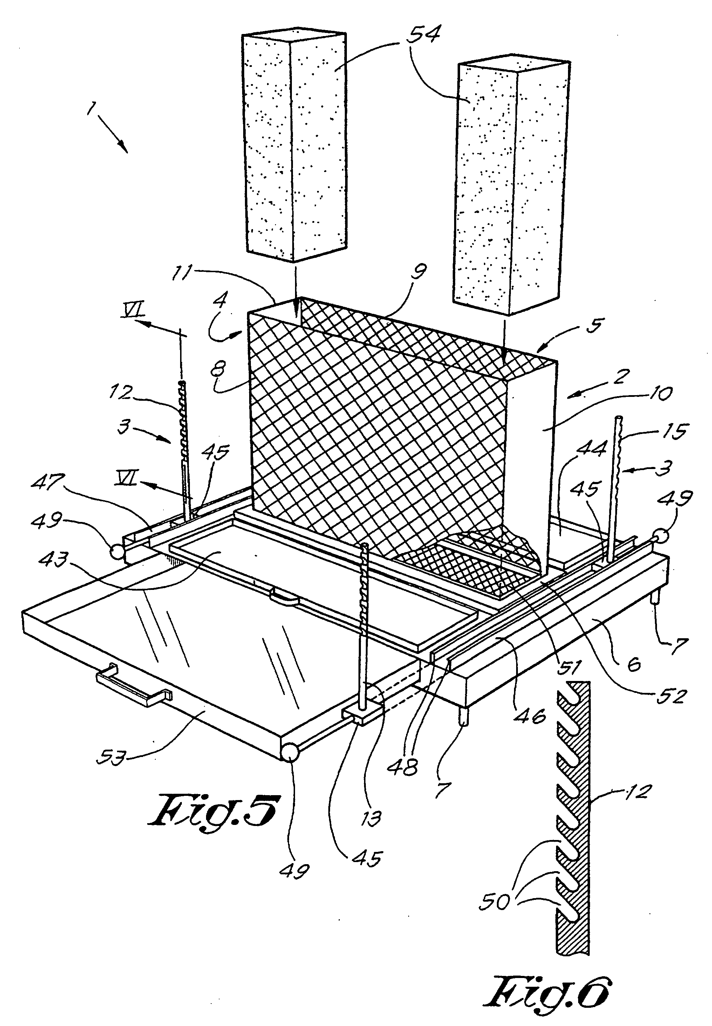

As represented in figure 3, the element 17 consists.of a pair of grids 30-31 in between which food can be clamped. These grids 30-31 are on one side connected to each other by means of hinges 32. On the other side they are provided with guiding elements 33-34 which in closed condition co-operate with each other.

Each grid 30, respectively 31, is provided with a handle 35-36, these being located on opposite sides. Furthermore each grid 30-31 is provided at its side opposite to the side provided with the handle 35, respectively 36, with a protruding portion 37, respectively 38.

Finally, the element 17 is provided with locking means to keep the grids 30-31 together in clamped position. In the embodiment of figure 3, these locking means consist of two metal rings 39-40, which are mounted respectively on the handles 35-36, whereby the ring 39 in clamped condition of the grids 30-31 can be slid also over the protruding portion 38, whereas the ring 40 can be slid also over the protruding portion 37.

The shape of the grids 30-31 may vary according to the food to be grilled.

It is clear that according to a variant the elements 16-17 for holding food can be made in one piece with the supports 12-13 and/or 14-15, or with the telescopically adjustable portions 23 of said supports.

Optionally, the grill 1 may be provided with an additional element for holding food, allowing to present food on top of the container 2. As shown in figures 1 and 4 such additional element may for example consist of an upper metal grid 41, which can be used for preparing food which is wrapped in aluminium foil to preserve the food from being exposed to unhealthy smoke or flames.

This grid 41 is provided with a handle 42, allowing to remove the grid 41 from the container 2, this in order to be able to add charcoal, whenever this is necessary.

It is clear that the grill 1 may comprise a plurality of elements 16, as well as a plurality of elements 17.

Further the grill 1 is also provided with one or more, in this case two receptacles 43-44 for catching juices, fats, etc. dripping from the food.

The use and functioning of the grill 1 can easily be derived from figure 1.

First the container 2 is filled up partially or completely with charcoal, which subsequently is lighted.

The grilling is done by providing meat or other food products on the element 16 or by clamping meat between a pair of grids 30-31 of an element 17 and subsequently installing the elements 16 and/or 17 onto the supports 12-13 and 14-15. Hereby the element 17 is presented in a position whereby the grids 30-31 are substantially parallel to the side 4 or 5.

The heat to which the products are exposed can be adjusted by changing the height of the supports and are changing their distance in respect to the container 2.

After grilling, the container 2 can be easily emptied by taking away the container 2 from the base plate 6, and turning it upside down.

A second embodiment of a grill 1 according to the invention is represented in figure 5.

A first difference with the first embodiment consists in that the supports 12-13 and 14-15 are mounted on slides 45, which can be displaced in U-shaped guides 46-47, provided with inwardly directed edges 48. The slides 45 are provided with handles 49 facilitating their adjustment.

A second difference consists in that the supports 12-13 and 14-15 are provided with a plurality of seats, formed by recesses 50, located at different heights, wherein the above-mentioned elements 16-17 for holding food can be placed. This plurality of seats allows to adjust the height of the food and also allows to provide two or more spits on one side above each other.

A third important difference consists in that the container 2 is provided with passages for ashes, such that the ashes can leave the container 2 at the bottom side. To this end the base plate 6 is provided with an opening under the container 2, whereas this container 2 is provided with a bottom 51 consisting of mesh-shaped grate, a grid-like structure, or similar.

The provision of an opening in the base plate 6 also offers the advantage that draught can be created through the container 2 resulting in a better burning of the charcoal.

Other differences consist in the presence of a border 52 of fire-proof and isolating stone under the container 2, as well as the provision of an ash-pan 53 to catch the ashes.

As shown in figure 5 the grill 1 of the invention may also be equipped with one or more filling blocks 54 which may be placed in the container 2 to reduce the space to be filled with charcoal, for example when only small quantities of food have to be grilled.

It is obvious that the blocks 54 can also be used in combination with the first embodiment.

It is also clear that the supports 12-13-14-15 and the above-mentioned elements 16-17 for presenting the food in front of the sides of the container 2 need not be connected to the base plate 6 of the grill 1. These supports may form part of a separate frame which can be displaced in respect to the container 2.

It is clear that preferably no cover will be provided over the complete grill 1, this in order to obtain that the smoke can always escape vertically. In this way it is avoided that smoke can reach the food products which are provided at the elements 16 and 17.

In case that only a limited quantity of food has to be grilled, only one side 4 or 5 of the grill can be used, whilst the other side then can be closed off by a plate.

Preferably the grill is composed of separate parts, such that it can easily be demounted and be put away in the winter.

The present invention is by no means limited to the form of embodiment described as an example and represented in the accompanying figures, on the contrary may such grill be realized according to various variants without leaving the scope of the invention.

## Claims

1. Grill, more particularly barbecue, wherein said grill (1) comprises at least, on the one hand, a heating element which substantially consists of a container (2) for charcoal and, on the other hand, means (3) allowing to present food to be grilled at least at two sides (4-5) of said container (2), **characterised in that** said means (3) include one or more upstanding supports (12-13-14-15) for elements (16-17) for holding food in front of said sides (4-5) of the container (2), which supports (12-13-14-15), at their lower sides, can be displaced along one or more horizontal guidances (25-26-46-47) located at the lower side of the container (2), by means of feet (24) or handles (49), allowing to change the distance of said supports (12-13-14-15) in respect to the container (2).

2. Grill according to claim 1 or 2, **characterised in that** each of said upstanding supports (12-13-14-15) can be displaced independently from each other.

3. Grill according to any of the preceding claims, **characterized in that** the container (2) is standing upright, and that said means (3) allowing to present food to be grilled at least at two sides (4-5) of said container (2) are located at opposite lateral sides (4-5) of this container (2).

4. Grill according to claim 4, **characterized in that** said container (2) is rectangular, whereby the distance between said opposite lateral sides (4-5) is smaller than the height and length of said container (2).

5. Grill according to claim 4 or 5, **characterized in that** the wall (8-9) of the container (2) at least at said two opposite lateral sides (4-5) is formed out of mesh-shaped grate.

6. Grill according to any of the aforegoing claims, **characterized in that** the container (2) is open or can be opened at the top side and/or at the bottom side is provided with passages for ashes.

7. Grill according to any of the aforegoing claims, **characterized in that** the means (3) allowing to present food to be grilled at least at two sides (4-5) of said container (2), and more particularly the supports (12-13-14-15), are provided with adjusting means allowing an adjustment of the food in height.

8. Grill according to claim 7, **characterized in that** said adjusting means consist of one or a combination of two or more of following provisions:
- one or more supports (12-13-14-15) for elements (16-17) for holding the food, which supports (12-13-14-15) can be telescopically adjusted in height;
- one or more supports (12-13-14-15) for elements (16-17) for holding the food, which supports (12-13-14-15) are provided with a plurality of seats (50) at different heights;

9. Grill according to any of the preceding claims, **characterised in that** said supports (12-13-14-15) are mounted on one or more slides (45), whereby these slides (45) are displacable in substantially horizontal guides (46-47), consisting of U-shaped profiles with inwardly directed edges (48), allowing to change the distance of said supports (12-13-14-15) in respect to the container (2).

10. Grill according to any of the aforegoing claims, **characterized in that** the means (3) allowing to present food to be grilled at least at two sides (4-5) of said container (2) include at least one element (16) comprising one pair of grids (30-31) in between which food can be clamped, whereby these grids (30-31) preferably are provided with handles (35-36) at opposite sides, such that the element (16) in closed condition can be supported at opposite ends by means of said handles (35-36).

11. Grill according to any of the aforegoing claims, **characterized in that** the means (3) allowing to present food to be grilled at least at two sides (4-5) of said container (2) include at least one element (17) in the form of a rotatable spit.

12. Grill according to any of the aforegoing claims, **characterized in that** it comprises an upper grid (41) which can be placed directly or indirectly on top of the container (2).

13. Grill according to any of the aforegoing claims, **characterized in that** it is provided with one or more receptacles (43-44) for catching juices, fats, etc. dripping from the food.

## Patentansprüche

1. Barbecue, insbesondere Barbecue, wobei der Barbecue (1) mindestens besteht aus einerseits einem Heizelement, das im Wesentlichen aus einem Behälter (2) für Holzkohle besteht, und andererseits Mitteln (3), die es ermöglichen, die zu grillende Nahrung an mindestens zwei Seiten (4-5) des Behälters (2) zu präsentieren, **dadurch gekennzeichnet, dass** die Mittel (3) eine oder mehrere stehende Stützen (12-13-14-15) für Elemente (16-17) zur Aufnahme von Nahrung vor den Seiten (4-5) des Behälters (2) bestehen, wobei die Stützen (12-13-14-15) an ihren unteren Seiten entlang einer oder mehrerer horizontaler Führungen (25-26-46-47), die an der unteren Seite des Behälters (2) angeordnet sind, mittels Füßen (24) oder Griffen (49) verschiebbar sind, so dass sich der Abstand der Stützen (12-13-14-15) zu dem Behälter (2) verändern lässt.

2. Barbecue nach Anspruch 1, **dadurch gekennzeichnet, dass** jede der Stützen (12-13-14-15) unabhängig von den anderen verschiebbar ist.

3. Barbecue nach einem der vorhergehenden Ansprüche, **dadurch gekennzeichnet, dass** der Behälter (2) aufrecht steht und dass die Mittel (3), die es ermöglichen, die zu grillende Nahrung an mindestens zwei Seiten (4-5) des Behälters (2) zu präsentieren, auf entgegengesetzten lateralen Seiten (4-5) des Behälters (2) angeordnet sind.

4. Barbecue nach Anspruch 4, **dadurch gekennzeichnet, dass** der Behälter (2) rechteckig ist, wobei der Abstand zwischen den entgegengesetzten lateralen Seiten (4-5) kleiner ist als die Höhe und Länge des Behälters (2).

5. Barbecue nach Anspruch 4 oder 5, **dadurch gekennzeichnet, dass** die Wand (8-9) des Behälters (2) mindestens an den zwei entgegengesetzten lateralen Seiten (4-5) aus einem maschenförmigen Rost gebildet ist.

6. Barbecue nach einem der vorhergehenden Ansprüche, **dadurch gekennzeichnet, dass** der Behälter (2) an der Oberseite offen ist oder geöffnet werden kann und/oder an der Unterseite mit Durchlässen für Asche versehen ist.

7. Barbecue nach einem der vorhergehenden Ansprüche, **dadurch gekennzeichnet, dass** die Mittel (3), die es ermöglichen, die zu grillende Nahrung an mindestens zwei Seiten (4-5) des Behälters (2) zu präsentieren, und insbesondere die Stützen (12-13-14-15) mit Verstellmitteln versehen sind, die eine Höhenverstellung der Nahrung ermöglichen.

8. Barbecue nach Anspruch 7, **dadurch gekennzeichnet, dass** die Verstellmittel aus einer oder einer Kombination von zwei oder mehr der folgenden Vorrichtungen bestehen:
- einer oder mehreren Stützen (12-13-14-15) für Elemente (16-17) zur Aufnahme der Nahrung, wobei die Stützen (12-13-14-15) teleskopisch in der Höhe verstellbar sind;
- einer oder mehreren Stützen (12-13-14-15) für Elemente (16-17) zur Aufnahme der Nahrung, wobei die Stützen (12-13-14-15) mit mehreren Sitzen (50) in unterschiedlichen Höhen versehen sind.

9. Barbecue nach einem der vorhergehenden Ansprüche, **dadurch gekennzeichnet, dass** die Stützen (12-13-14-15) an einer oder mehreren Gleitschienen (45) montiert sind, wobei die Gleitschienen (45) im Wesentlichen horizontal verschiebbare Führungen (46-47) sind, bestehend aus U-förmigen Profilen mit nach innen gerichteten Kanten (48), die es ermöglichen, den Abstand der Stützen (12-13-14-15) in Bezug auf den Behälter (2) zu verändern.

10. Barbecue nach einem der vorhergehenden Ansprüche, **dadurch gekennzeichnet, dass** die Mittel (3), die es ermöglichen, die zu grillende Nahrung an mindestens zwei Seiten (4-5) des Behälters (2) zu präsentieren, mindestens ein Element (16) enthalten, das aus einem Paar Gitter (30-31) besteht, zwischen die Nahrung geklemmt werden kann, wobei diese Gitter (30-31) vorzugsweise mit Griffen (35-36) an entgegengesetzten Seiten versehen sind, so dass das Element (16) in geschlossenem Zustand an entgegengesetzten Enden mittels dieser Griffe (35-36) gestützt werden kann.

11. Barbecue nach einem der vorhergehenden Ansprüche, **dadurch gekennzeichnet, dass** die Mittel (3), die es ermöglichen, die zu grillende Nahrung an mindestens zwei Seiten (4-5) des Behälters (2) zu präsentieren, mindestens ein Element (17) in der Form eines drehbaren Spießes enthalten.

12. Barbecue nach einem der vorhergehenden Ansprüche, **dadurch gekennzeichnet, dass** er ein oberes Gitter (41) enthält, das direkt oder indirekt oben auf den Behälter (2) gelegt werden kann.

13. Barbecue nach einem der vorhergehenden Ansprüche, **dadurch gekennzeichnet, dass** er mit einem oder mehreren Sammelgefäßen (43-44) zum Auffangen von dem von der Nahrung tropfenden Saft, Fett usw. versehen ist.

## Revendications

1. Gril, plus particulièrement barbecue, dans lequel ledit gril (1) comprend au moins, d'une part, un élément chauffant qui est constitué essentiellement d'un récipient (2) pour le charbon de bois et, d'autre part, des moyens (3) permettant de présenter les aliments à griller au moins à deux côtés (4 - 5) dudit récipient (2), **caractérisé en ce que** lesdits moyens (3) englobent un ou plusieurs supports dressés (12 - 13 - 14 - 15) pour des éléments (16 - 17) destinés à maintenir les aliments devant lesdits côtés (4 - 5) du récipient (2), lesdits supports (12 - 13 - 14 - 15), à leurs côtés inférieurs, pouvant être déplacés le long d'un ou de plusieurs guides horizontaux (25 - 26 - 46 - 47), disposés sur le côté inférieur du récipient (2), à l'aide de pieds (24) ou de poignées (49), permettant de modifier la distance desdits supports (12 - 13 - 14 - 15) par rapport au récipient (2).

2. Gril selon la revendication 1 ou 2, **caractérisé en ce que** chacun desdits supports dressés (12 - 13 - 14 - 15) peut être déplacé de manière réciproquement indépendante.

3. Gril selon l'une quelconque des revendications précédentes, **caractérisé en ce que** le récipient (2) est dressé à la verticale, et **en ce que** lesdits moyens (3) permettant de présenter les aliments à griller au moins à deux côté (4 - 5) dudit récipient (2) sont disposés sur les côtés latéraux opposés (4 - 5) de ce récipient (2).

4. Gril selon revendication 3, **caractérisé en ce que** ledit récipient (2) est de forme rectangulaire, la distance entre lesdits côtés latéraux opposés (4 - 5) étant inférieure à la hauteur et à la longueur dudit récipient (2).

5. Gril selon la revendication 4 ou 5, **caractérisé en ce que** la paroi (8 - 9) du récipient (2), au moins auxdits deux côtés latéraux opposés (4 - 5) est constituée d'une grille en forme de treillis.

6. Gril selon l'une quelconque des revendications précédentes, **caractérisé en ce que** le récipient (2) est ouvert ou peut être ouvert à son côté supérieur et/ou est muni de passages pour les cendres à son côté inférieur.

7. Gril selon l'une quelconque des revendications précédentes, **caractérisé en ce que** les moyens (3) permettant de présenter des aliments à griller au moins à deux côtés (4 - 5) dudit récipient (2), et plus particulièrement les supports (12, 13, 14, 15) sont munis de moyens de réglage permettant de procéder à un réglage des aliments en hauteur.

8. Gril selon la revendication 7, **caractérisé en ce que** les lesdits moyens de réglage sont constitués par une proposition ci-après ou par une combinaison de deux propositions ci-après ou plus :
- un ou plusieurs supports (12, 13, 14, 15) pour des éléments (16 - 17) destinés à retenir les aliments, lesdits supports (12, 13, 14, 15) pouvant être soumis à un réglage en hauteur à la manière d'un télescope ;
- un ou plusieurs supports (12, 13, 14, 15) pour des éléments (16 - 17) destinés à retenir les aliments, lesdits supports (12, 13, 14, 15) étant munis de plusieurs sièges (50) à différentes hauteurs.

9. Gril selon l'une quelconque des revendications précédentes, **caractérisé en ce que** lesdits supports (12, 13, 14, 15) sont montés sur une ou plusieurs glissières (45), lesdites glissières étant à même de se déplacer dans des guides essentiellement horizontaux (46 - 47), constitués par des profilés en U comportant des bords (48) orientés vers l'intérieur, qui permettent de modifier la distance desdits supports (12, 13, 14, 15) par rapport au récipient (2).

10. Gril selon l'une quelconque des revendications précédentes, **caractérisé en ce que** les moyens (3) permettant de présenter des aliments à griller au moins à deux côtés (4 - 5) dudit récipient (2) englobent au moins un élément (16) comprenant une paire de grilles (30 - 31) entre lesquelles on peut insérer un aliment, ces grilles (30 - 31) étant de préférence munies de poignées (35 - 36) sur leurs côtés opposés, de telle sorte que l'élément (16) dans sa position fermée peut être supporté à ses extrémités opposées à l'aide desdites poignées (35 - 36).

11. Gril selon l'une quelconque des revendications précédentes, **caractérisé en ce que** les moyens (3) permettant de présenter des aliments à griller au moins à deux côtés (4 - 5) dudit récipient (2) englobent au moins un élément (17) sous la forme d'une broche rotative.

12. Gril selon l'une quelconque des revendications précédentes, **caractérisé en ce qu'**il comprend une grille supérieure (41) qui peut être placée directement ou indirectement par-dessus le récipient (2).

13. Gril selon l'une quelconque des revendications précédentes, **caractérisé en ce qu'**il est muni d'un ou de plusieurs réceptacles (43 - 44) pour récupérer les jus, les graisses, etc. qui s'écoulent goutte à goutte de l'aliment.
